# NEUE EUROPÄISCHE PATENTSCHRIFT

(11) **EP 0 152 607 B2**
(45) Veröffentlichungstag und Bekanntmachung des Hinweises auf die Entscheidung über den Einspruch: **22.03.1995**
(45) Hinweis auf die Patenterteilung: 30.05.1990
(21) Anmeldenummer: 84115784.5
(22) Anmeldetag: 19.12.1984
(51) Int. Cl.: B60R 9/04

(54) **Dachlastenträger für Kraftfahrzeuge**
Luggage carrier on top for motor vehicles
Galerie pour véhicules automobiles

(30) Priorität: 22.02.1984 DE 3406431
(43) Veröffentlichungstag der Anmeldung: 28.08.1985
(73) Patentinhaber: silvretta-sherpas Sportartikel GmbH, D-85757 Karlsfeld (DE)
(72) Erfinder: Zoor, Reinhold, D-8000 München 40 (DE)
(74) Vertreter: Zmyj, Erwin, Dipl.-Ing., Dipl.-Wirtsch.-Ing.

(56) Entgegenhaltungen:
- EP-A- 0 105 849
- WO-A-81/00087
- DE-A- 2 551 646
- DE-A- 3 004 919
- GB-A- 699 968
- US-A- 4 101 061

## Beschreibung

Die Erfindung bezieht sich auf einen Dachlastenträger für Kraftfahrzeuge mit mindestens einem Tragholm, der mittels zweier Stützfüße auf dem Kraftfahrzeugdach abstützbar und durch das Kraftfahrzeugdach in seinem Randbereich umgreifende Spannkrallen befestigt ist, wofür zumindest eine Spannkralle gegenüber dem Tragholm beweglich und durch eine Spannvorrichtung gegen das Kraftfahrzeugdach spannbar ist.

Bei einem bekannten Dachlastenträger dieser Art (DE-A-30 04 919) sind der Stützfuß und die Spannkralle einstückig ausgeführt, weshalb es erforderlich ist, daß die aus Stützfuß und Spannkralle bestehende Einheit, die in der Nähe des Dachholmes vorgesehen ist, exakt der Form des Daches angepaßt werden muß, um eine Verkantung des Stützfußes gegenüber der Dachfläche und damit hohe Flächenpressungen auf kleinen Flächen zu vermeiden, was zu Eindrückungen in der Dachfläche oder zumindest zu Lackschäden führen könnte. Aber selbst bei genau angepaßter Ausgestaltung ist es wegen der sich über die Fahrzeuglänge verändernden Formgebung im Dachbereich erforderlich, den Dachlastenträger an einer ganz bestimmten Stelle, an der der Stützfuß der Dachform angepaßt ist, auch anzubringen, um die oben erwähnten Nachteile zu vermeiden. Da nicht immer Markierungen am Kraftfahrzeug vorgesehen sind, ist es für den Benutzer schwierig, diejenige Stelle zu finden, an der eine exakte Anpassung des Stützfußes und der Spannkralle an die Dachform gegeben ist. Zwar sind die Veränderungen in der Dachform nicht so gravierend, jedoch genügen schon Verschiebungen von wenigen Zentimetern, um zu erreichen, daß nicht mehr die ideale Auflage gegeben ist. Wegen der erheblichen Unterschiede zwischen dem vorderen und dem hinteren Dachbereich müssen bei zwei Tragholmen, wie sie beispielsweise für die Bildung von Skiträgern notwendig sind, unterschiedliche Stutzfüße für den vorderen und hinteren Dachbereich vorgesehen werden, was nicht nur die Herstellung verteuert, sondern auch eine Kennzeichnung erforderlich macht, damit der Benutzer nach Möglichkeit eine richtige Zuordnung vornimmt, um die oben erwähnten Beschädigungen zu vermeiden.

Aus der US-A-4 101 061 ist ein Dachlastenträger für Kraftfahrzeuge mit mindestens einem Tragholm bekannt, der mittels zweier Stützfüsse auf dem Kraftfahrzeug abstützbar und durch das Kraftfahrzeugdach in seinem Randbereich umgreifende Spannkrallen befestigt ist, wofür die Spannkrallen beweglich an Haken der Stützfüsse angehängt und die Stützfüsse gelenkig an Stützbeinen angeordnet sind, die auf dem Tragholm verschiebbar geführt und durch eine Schraubspindel, die in eine Mutter am Stützbein eingreift zum Zwecke der Verspannung verschiebbar sind. Nachteilig bei dieser Ausgestaltung ist insbesondere die Tatsache, daß die Spannkralle am Stützfuß außerhalb seines Schwenkpunktes angehängt ist und somit bei einer Verspannung ein Kippmoment auf diesen ausübt, was zu einer ungleichmäßigen Flächenpressung führt. Außerdem ist eine Verschiebung des Stützfußes auf der Dachoberfläche unvermeidbar, was zu einer Beschädigung der Lackoberfläche führen kann. Zwar ist bei einer abgeänderten Ausführungsform dieses Dachlastenträgers die Gelenkachse des Stützfußes in einem Langloch des Stützbeines geführt, wodurch Verschiebebewegungen des Stützfußes auf der Dachoberfläche bis zu einem gewissen Grad vermieden werden können. Dabei sind die Spannkrallen beweglich an Haken der Stützbeine befestigt. Ein beiden Ausführungsvarianten anhaftender Mangel ist auch noch darin zu sehen, daß die Spannkralle gegen ein gewaltsames Abziehen von der Dachkante nicht geschützt ist. Das Dokument EP-A-0 105 849 veröffentlicht am 18.04.1984 gilt als Stand der Technik, gemäß Artikel 54(3) EPÜ, kommt aber nicht in Betracht bei der Beurteilung der erfinderischen Tätigkeit.

Aufgabe der Erfindung ist es, einen Dachlastenträger der eingangs erwähnten Art so auszugestalten, daß Unterschiede in der Dachgestaltung die Anbringung der Dachlastenträger in weiten Grenzen nicht beeinträchtigen.

Diese Aufgabe wird bei einem Dachlastenträger mit den Merkmalen des Anpruchs 1 erfindungsgemäß gelöst.

Durch diese Ausgestaltung ist eine selbsttätige Anpassung der Stützfüße an die Dachform während des Anbringens des Dachlastenträgers gewährleistet, so daß die Stützfüße vollflächig auf dem Dach aufruhen.

Die Gelenkverbindung kann ein Kugelgelenk oder eine im wesentlichen rechtwinklig zum Tragholm verlaufende Schwenkachse aufweisen. Im ersten Fall ist eine Anpassung nach jeder Richtung möglich, während im zweiten Fall eine Anpassung nur um die quer zu den Tragholmen verlaufende Achse möglich ist.

Wenn in weiterer Ausgestaltung der Erfindung die Spannkralle durch eine zwischen der Schwenkachse und dem dachseitigen Ende der Spannkralle an dieser sowie am Tragholm angreifende Spannvorrichtung in der Gebrauchslage gegen das Dach spannbar ist, so wird hierdurch in einfacher Weise die spannzangenartige Funktion verwirklicht, die notwendig ist, um das Kraftfahrzeugdach durch die Spannkrallen in seitlicher Richtung nach Art einer Spannzange zu erfassen und so den Tragholm zu befestigen. Bei der eingangs erwähnten bekannten Ausführungsform ist die Spannkralle in einer Kulissenführung verschiebbar geführt, was einen wesentlich größeren technischen Aufwand erfordert und außerdem ist diese Führung einer erhöhten Verschmutzungsgefahr ausgesetzt.

Eine besonders bevorzugte Ausgestaltung der Erfindung ergibt sich dadurch, daß die Spannkralle an einer Kappe ausgebildet ist, die die Spannvorrichtung, z.B. Spannschraube, überdeckt, die nur durch eine Montageöffnung in dieser Spannkrallenkappe betätigbar ist, wobei die Montageöffnung durch eine Absperrvorrichtung verschließbar ist.

Diese Ausgestaltung ist deshalb so vorteilhaft und damit bevorzugt, weil die Spannkrallenkappe in sich mehrere Eigenschaften vereinigt, die bisher nur durch verschiedene Teile erzielbar waren. Diese Spannkrallenkappe bildet denjenigen ßauteil, der mit den Stützfüßen der bisherigen Dachlastenträger vergleichbar ist, während die an dieser Spannkrallenkappe angelenkten Stützfüße Auflager bilden, die der Unterlage anpaßbar angeordnet sind. Weiterhin trägt diese Spannkrallenkappe die zur Befestigung notwendige Spannkralle und schließlich überdeckt sie auch die Spannschraube und ermöglicht so in Verbindung mit einer Absperrvorrichtung eine Diebstahlssicherung, die in bekannter Weise nur dadurch erzielbar war, daß eine zusätzliche Abdeckkappe vorgesehen ist, die gegenüber einem Bauteil des Dachlastenträgers verschließbar ist und dabei die Spannschraube überdeckt. Diese zusätzliche abschließbare Kappe wird durch die vorliegende Erfindung erübrigt. Durch diese Ausgestaltung wird die Aufgabe gelöst eine einwandfreie Abstützung, Befestigung und Sicherung des Tragholmes am Kraftfahrzeugdach zu ermöglichen Die einwandfreie Abstützung wird durch die schwenkbare Anordnung der Stützfüße an der Spannkrallenkappe, die Befestigung durch die Spannkralle und die Sicherung durch die kappenartige Ausbildung der Spannkralle, welche die Spannschraube überdeckt, ermöglicht.

Als Absperrvorrichtung kann ein Schloß dienen, durch dessen Schloßriegel die Montageöffnung verschließbar ist.

Die Erfindung ist in der Zeichnung beispielsweise dargestellt. In dieser zeigen:

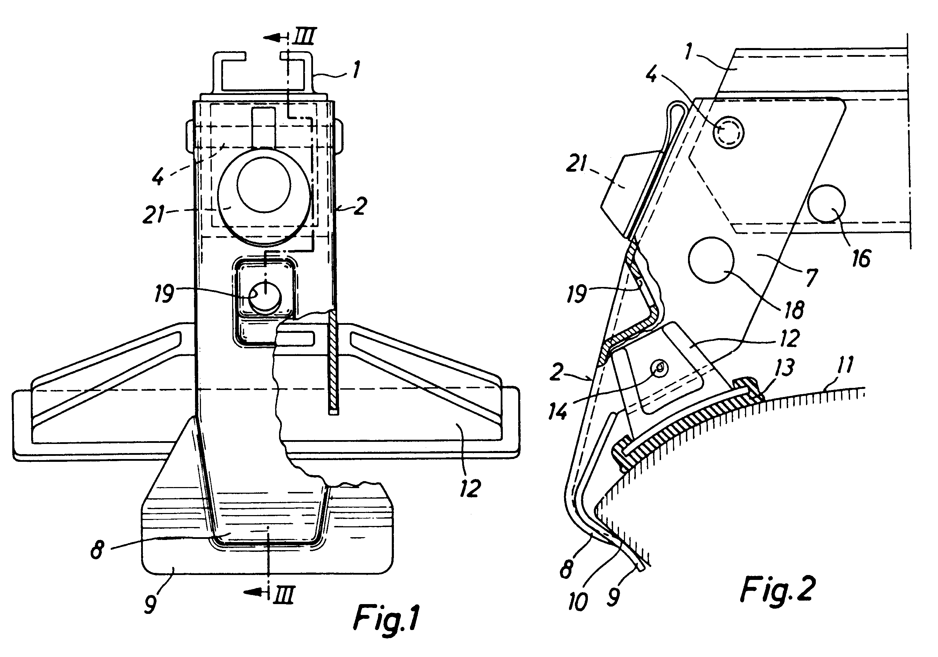

Fig. 1 eine teilweise aufgeschnittene Endansicht eines Dachlastenträgers;
Fig 2 eine Seitenansicht des einen Endes eines Dachlastenträgers;

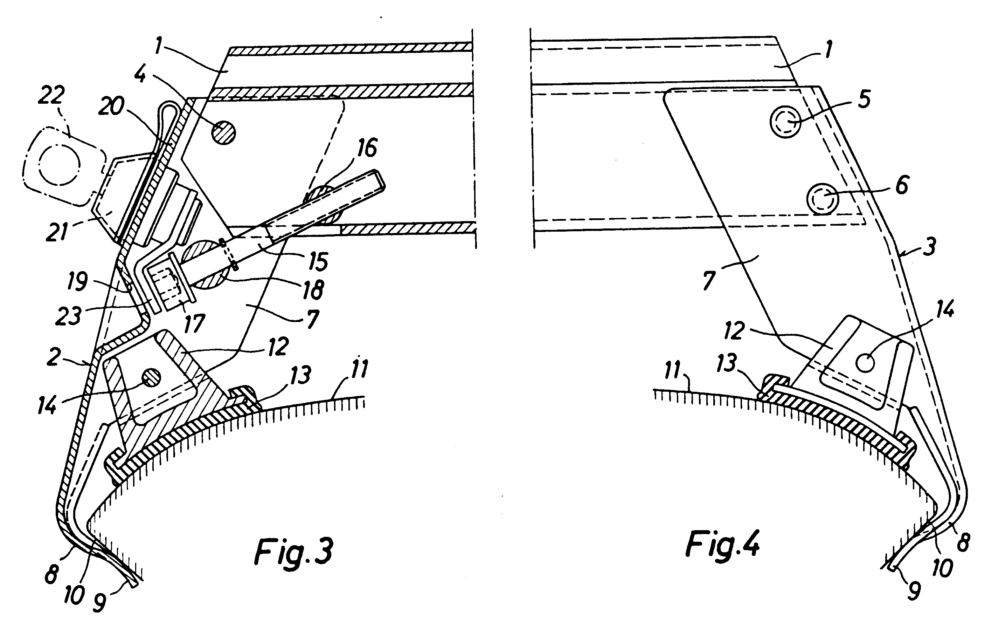

Fig. 3 einen Schnitt nach der Linie III-III in Fig 1; und
Fig. 4 eine der Fig. 2 entsprechende Darstellung einer abweichenden Ausgestaltung des in Fig. 2 dargestellten gegenüberliegenden Endes des Dachlastenträgers.

Der in der Zeichnung dargestellte Dachlastenträger weist einen Tragholm 1 auf, der zur Aufnahme von Lasten dient, die beispielsweise mittels auswechselbaren Halterungen befestigbar sind. So können beispielsweise Skihalter, Fahrradhalter oder Bootshalter bzw. Surfbretthalter auf dem Tragholm angeordnet sein. An den Enden des Tragholmes sind Spannkrallenkappen 2 und 3 vorgesehen. Die Spannkrallenkappe 2 ist mittels einer Schwenkachse 4 schwenkbar am Tragholm angelenkt, wahrend die andere Spannkrallenkappe 3 am gegenüberliegenden Ende mittels Nietbolzen 5 und 6 fest am Tragholm 1 befestigt ist. Die Spannkrallenkappen sind über einen großen Teil ihrer Länge U-förmig und damit kappenartig ausgebildet, wobei dieser Teil mit 7 bezeichnet ist und an seinem unteren Ende in eine hakenartige Kralle 8 übergeht, die bis über den bogenförmigen Teil hinaus hohlprofilartig gestaltet und damit besonders verbiegungssteif ist. Das auslaufende Ende der Kralle 8 ist mit 9 bezeichnet und liegt im Gebrauchszustand im wesentlichen an der schräg nach unten gerichteten Seite eines Dachholmes 10 eines Kraftfahrzeuges an. Mit Ausnahme der Befestigungsart der Spannkrallenkappen am Tragholm 1 sind die Spannkrallenkappen untereinander gleich ausgeführt, weshalb gleiche Bezugszeichen für gleiche Teile verwendet werden.

Zur Abstützung des Dachlastenträgers auf dem Dach 11 im Bereich des Dachholmes 10 dient ein Stützfuß 12, der zur Schonung des Daches eine weiche elastische Auflage 13 besitzt. Der Stützfuß 12 ist mittels einer Schwenkachse 14 im unteren Kappenteil 7 der Spannkrallenkappe 2 bzw. 3 schwenkbar gelagert, so daß er sich beim Aufsetzen des Dachlastenträgers auf das Dach der jeweiligen Dachform anpassen kann.

Zur Befestigung des Dachlastenträgers am Kraftfahrzeugdach 11 ist die schwenkbar gelagerte Spannkrallenkappe 2 durch eine Spannschraube 15 in ihrer Winkeleinstellung gegenüber dem Tragholm veränderbar und damit gegen das Dach des Kraftfahrzeuges verspannbar, wenn der Dachlastenträger mit seinen Stützfüßen 12 auf dem Kraftfahrzeugdach aufsitzt und die Krallen 8 unter den Dachholm 10 an der jeweiligen Fahrzeugseite greifen. Die Spannschraube 15 ist in ein als Achse ausgebildetes Gewindestück 16 einschraubbar, um eine Schwenkbewegung der Spannschraube 15 beim Spannvorgang zu ermöglichen. Dieses Gewindestück 16 ist am Tragholm 1 drehbar gelagert und dient somit als Schwenkachse für die Spannschraube 15. Der Schraubenkopf 17 der Spannschraube 15 stützt sich an einem Querbolzen 18 ab, der eine Durchgangsbohrung aufweist, durch die die Spannschraube 15 hindurchgesteckt ist. Der Querbolzen 18 ist an den Seitenwangen des kappenartigen Teiles 7 der Spannkrallenkappe drehbar gehalten, so daß auch hier eine Winkelveränderung der Spannschraube 15 gegenüber der Spannkrallenkappe 2 möglich ist, wenn diese gegen das Dach gespannt wird. Der Schraubenkopf 17 ist als Imbusschraubenkopf ausgebildet, wobei zur Betätigung der Spannschraube 15 in dem kappenartigen Teil 7 der Spannkrallenkappe 2 eine Montageöffnung 19 vorgesehen ist, um den Durchtritt eines Schraubenschlüssels durch die Spannkrallenkappe zu ermöglichen. Der Bereich, in dem sich die Montageöffnung 19 befindet, ist gegenüber dem Rückenteil 20 des kappenartigen Abschnittes 7 abgewinkelt und steht im wesentlichen senkrecht zur Achse der Spannschraube 15.

In den Rücken 20 des kappenartigen Teiles 7 der Spannkrallenkappe 2 ist ein Schloß 21 eingesetzt, das mittels eines Schlüssels 22 betätigbar ist und einen Schloßriegel 23 aufweist, der in der einen Schließstellung des Schlosses die Montageöffnung 19 verschließt und sie in der anderen Schließstellung freigibt. Der Schließriegel 23 liegt dabei im Inneren des kappenartigen Teiles 7, so daß er gegen einen äußeren Zugriff geschützt ist. Im verschlossenen Zustand der Montageöffnung 19 kann die Spannschraube nicht mehr betätigt werden, so daß der Dachlastenträger in seiner auf dem Dach aufgebrachten Stellung gesichert ist. Bevor die Verspannung der Spannkrallenkappe 2 beginnt, wird zuerst die fest mit dem Tragholm 1 verbundene Spannkrallenkappe 3 mit ihrer Kralle 8 unter den Dachholm 10 eingehängt, worauf dann die schwenkbare Spannkrallenkappe 2 mit ihrer Kralle 8 ebenfalls unter den entsprechenden Dachholm geschwenkt wird, wobei durch Betätigung der Spannschraube 15 die beiden Spannkrallenkappen das Fahrzeugdach zwischen sich nach Art eines Schraubstockes einspannen. Die auf den Tragholm 1 aufgelegte Last wird durch die Stützfüße 12 auf das Dach unmittelbar übertragen, wobei sich diese Stützfüße über die Schwenkachse 14 an der Spannkrallenkappe 2 bzw. 3 abstützen. Die Spannkrallenkappen dienen somit nicht nur als Stützstreben, sondern auch als Befestigungsteile für den Tragholm und als Sicherungsteile für die Spannschraube 15.

## Patentansprüche

1. Dachlastenträger für Kraftfahrzeuge mit mindestens einem Tragholm (1), der mittels zweier Stützfüße (12) auf dem Kraftfahrzeugdach (11) abstützbar und durch das Kraftfahrzeugdach (11) in seinem Randbereich umgreifende Spannkrallen (2, 3) befestigt ist, wofür zumindest eine Spannkralle (2, 3) gegenüber dem Tragholm (1) beweglich und durch eine Spannvorrichtung (15, 16, 17, 18) gegen das Kraftfahrzeugdach (11) spannbar ist, dadurch gekennzeichnet, daß die Stützfüße (12) unmittelbar an den Spannkrallen (2, 3) mittels einer Gelenkverbindung (14) im unteren Teil der Spannkrallen (2, 3) angeordnet sind und daß die Spannkralle (2, 3) an ihrem dem Dach abgewandten Ende am Tragholm (1) schwenkbar gelagert ist.

2. Dachlastenträger nach Anspruch 1, dadurch gekennzeichnet, daß die Gelenkverbindung (14) ein Kugelgelenk aufweist.

3. Dachlastenträger nach Anspruch 1, dadurch gekennzeichnet, daß die Gelenkverbindung (14) eine im wesentlichen rechtwinklig zum Tragholm (1) verlaufende Schwenkachse (14) aufweist.

4. Dachlastenträger nach einem der Ansprüche 1 bis 3, dadurch gekennzeichnet, daß die Spannkralle (2) durch eine zwischen der Schwenkachse (4) und dem dachseitigen Ende der Spannkralle (2) an dieser sowie am Tragholm (1) angreifende Spannvorrichtung (15-18) in der Gebrauchslage gegen das Dach spannbar ist.

5. Dachlastenträger nach einem der Ansprüche 1 bis 4, dadurch gekennzeichnet, daß die Spannkralle an einer Kappe (7) ausgebildet ist, die die Spannvorrichtung, z.B. Spannschraube (15), überdeckt, die nur durch eine Montageöffnung (19) in dieser Spannkrallenkappe (2) betätigbar ist, wobei die Montageöffnung (19) durch eine Absperrvorrichtung (21, 23) verschließbar ist.

6. Dachlastenträger nach Anspruch 5, dadurch gekennzeichnet, daß als Absperrvorrichtung ein Schloß (21) dient, durch dessen Schloßriegel (23) die Montageöffnung (19) verschließbar ist.

## Claims

1. Roof load carrier for motor vehicles, having at least one carrying rod (1) which is supportable by means of two supporting feet (12) on the motor vehicle roof (11) and is secured by clamping claws (2, 3) surrounding the motor vehicle roof (11) in its edge region, for the purpose of which at least one clamping claw (2, 3) is movable with respect to the carrying rod (1) and can be clamped by a clamping means (15, 16, 17, 18) against the motor vehicle roof (11), characterized in that the supporting feet (12) are arranged in the lower part of the clamping claws (2, 3) directly on the clamping claws (2, 3) by means of an articulating connection (14) and in that the clamping claw (2, 3) is mounted pivotally on the carrying rod (1) at its end remote from the roof.

2. Roof load carrier according to Claim 1, characterized in that the articulating connection (14) has a ball-and-socket joint.

3. Roof load carrier according to Claim 1, characterized in that the articulating connection (14) has a pivot axis (14) extending substantially at right angles to the carrying rod (1).

4. Roof load carrier according to one of Claims 1 to 3, characterized in that the clamping claw (2) can be clamped in the use position against the roof by a clamping means (15-18) acting, between the pivot axis (4) and the end of the clamping claw (2) on the roof side, on this clamping claw and on the carrying rod (1).

5. Roof load carrier according to one of Claims 1 to 4, characterized in that the clamping claw is constructed on a cap (7) which covers the clamping means, e.g. clamping screw (15), which is actuable only through an assembly opening (19) in this clamping claw cap (2), the assembly opening (19) being closable by a blocking means (21, 23).

6. Roof load carrier according to Claim 5, characterized in that there serves as the blocking means a lock (21) by means of whose locking bar (23) the assembly opening (19) is closable.

## Revendications

1. Galerie pour véhicules automobiles comportant au moins un longeron porteur (1), qui peut s'appuyer au moyen de deux pattes d'appui (12) sur le toit du véhicule (11) et est fixée par des griffes de serrage (2, 3) en prise sur la bordure du toit du véhicule (11), au moins une griffe de serrage (2, 3) pouvant être serrée de façon amovible sur le longeron porteur (1) et contre le toit du véhicule (11) au moyen d'un dispositif de serrage (15, 16, 17, 18), caractérisée en ce que les pattes d'appui (12) sont disposées directement sur les griffes de serrage (2, 3) au moyen d'un joint articulé (14) dans la partie inférieure des griffes de serrage (2, 3) et en ce que la griffe de serrage (2, 3) est logée de façon pivotante sur le longeron porteur (1) en son extrémité faisant face au toit.

2. Galerie selon la revendication 1, caractérisée en ce que le joint articulé (14) comporte une rotule.

3. Galerie selon la revendication 1, caractérisée en ce que le joint articulé (14) comporte un axe de pivotement (14) s'étendant pratiquement à angle droit par rapport au longeron porteur (1).

4. Galerie selon l'une des revendications 1 à 3, caractérisée en ce que la griffe de serrage (2) peut être serrée contre le toit, dans sa position d'utilisation, par un dispositif de serrage (15 - 18) s'engageant entre l'axe de pivotement (4) et l'extrémité du côté toit de la griffe de serrage (2), sur cet axe (4) ainsi que sur le longeron porteur (1).

5. Galerie selon l'une quelconque des revendications 1 à 4, caractérisée en ce que la griffe de serrage est formée sur un capot (7) qui recouvre le dispositif de serrage, par exemple une vis de serrage (15) qui ne peut être actionnée qu'à travers un orifice de montage (19) dans ce capot de griffe de serrage (2), l'orifice de montage (19) pouvant être fermé par un système de blocage (21, 23).

6. Galerie selon la revendication 5, caractérisée en ce qu'on utilise, comme système de blocage, une serrure (20) dont le pène (23) peut se déplacer à travers l'orifice de montage (19).
